# EUROPÄISCHE PATENTSCHRIFT

(11) **EP 0 546 332 B1**
(45) Veröffentlichungstag und Bekanntmachung des Hinweises auf die Patenterteilung: **14.05.1997**
(21) Anmeldenummer: 92119175.5
(22) Anmeldetag: 10.11.1992
(51) Int. Cl.: B32B 27/08

(54) **Thermoplastische Mehrschichtverbunde**
Thermoplastic laminates
Stratifiés en matière thermoplastique

(30) Priorität: 14.11.1991 DE 4137434
(43) Veröffentlichungstag der Anmeldung: 16.06.1993
(73) Patentinhaber: HÜLS AKTIENGESELLSCHAFT, 45764 Marl (DE)
(72) Erfinder: Mügge, Joachim, Dr., W-4358 Haltern (DE); Röber, Stefan, Dr., W-4370 Marl (DE); Jadamus, Hans, Dr., W-4370 Marl (DE)

(56) Entgegenhaltungen:
- EP-A- 0 008 891
- EP-A- 0 365 211

## Beschreibung

Gegenstand der Erfindung sind thermoplastische Mehrschichtverbunde.

Polyamide bzw. Polyester sind für eine Reihe von Anwendungen ungeeignet. Polyamide sind bespielsweise nicht witterungsbeständig, da sie unter Belichtung altern sowie Luftfeuchtigkeit aufnehmen. Dies führt zu Verfärbung, Verschlechterung der mechanischen Eigenschaften und Verzugserscheinungen.

Obwohl Polyamide gute mechanische Eigenschaften, insbesondere gute Zähigkeit, aufweisen, haben sie eine schlechte Sperrwirkung; so können polare Substanzen leicht durch Polyamide migrieren. Dies ist beispielsweise bei Kraftstoffleitungen, in denen alkoholhaltiger Kraftstoff gefördert wird, äußerst nachteilig.

Polyester sind im allgemeinen gut witterungsbeständig und besitzen eine ausgezeichnete Sperrwirkung sowohl gegenüber polaren als auch unpolaren Medien. Sie sind jedoch in der Regel schlagempfindlich. Insbesondere die Kerbschlagzähigkeit ist nicht ausreichend. Deshalb können Polyester in vielen Fällen, in denen Eigenschaften wie ausgezeichnete Sperrwirkung, hohe Temperaturbeständigkeit und gute Steifigkeit erwünscht sind, nicht verwendet werden.

In DE-PS 38 27 092 wird ein Mehrschichtrohr beschrieben, das von innen nach außen Schichten aus Polyamid, Polyvinylalkohol, Polyamid und Polyester aufweist. Der Polyester wird hierbei nur in einer dünnen Außenschicht eingesetzt, um so eine höhere Kurzzeitwärmeformbeständigkeit zu erreichen. Es ist allerdings dem Fachmann bekannt, daß die weitaus meisten Polymere, so auch Polyamide und Polyester, miteinander unverträglich sind, weshalb bei der Herstellung von Mehrschichtverbunden keine Anhaftung zwischen den Laminatschichten erreicht wird. Ein kraftschlüssiger Verbund zwischen den einzelnen Polymerschichten ist aber bei technischen Anwendungen unbedingt erforderlich.

In der EP-A-0 008 891 werden Mehrschichtverbunde beschrieben, bei denen eine Schicht aus einem Polyamid mit einem Überschuß an Amino-Endgruppen besteht und die andere Schicht aus einem Polymer besteht, das Carboxylgruppen, Salze davon, Carbonat- oder Anhydridgruppen trägt. Das andere Polymer kann auch ein Polyester sein, dessen funktionelle Gruppen beispielweise durch hydrolytischen Abbau entstanden sind.

Aus EP-A-287 839 sind Mehrschichtverbunde aus besonderen Polyamidmischungen und verschiedenen anderen Thermoplasten, wie beispielsweise Polyethylenterephthalat, bekannt. Dort wird, um die unverzichtbare Haftung zwischen den beiden Schichten zu erzielen, ein Haftvermittler zwischen die Laminatschichten eingebracht. Als geeignete Haftvermittler werden funktionalisierte Polyolefine, funktionalisierte Ethylen/Vinylacetat-Copolymere, Ethylen/Acrylat-Copolymere, Ionomere, Polyalkylenoxid/Polyester-Blockcopolymere, Derivate von Carboxymethylcellulose sowie Blends dieser Polymeren mit Polyolefinen angegeben.

Es hat sich nun herausgestellt, dar diese Haftvermittler insbesondere im System Polyamid/Polyester keinen kraftschlüssigen Verbund ergeben. In den Fällen, in denen ein gewisser Kraftschluß erzielt werden kann, geht dieser beim Erwärmen oder bei Einwirkung von Lösemitteln verloren, da die Haftvermittler nicht ausreichend wärmeform- und lösemittelbeständig sind. Zudem versagen derartige Verbunde bei Scherbelastung durch kalten Fluß des Haftvermittlers.

Aufgabe der vorliegenden Erfindung war es, einen lösemittel- und temperaturbeständigen Verbund zwischen Polyester und Polyamid zu schaffen, der unempfindlich gegenüber Scherbeanspruchung ist und gute mechanische Eigenschaften besitzt. Insbesondere sollte eine starke Kohäsion an den Phasengrenzflächen erzielt werden.

Diese Aufgabe wird gelöst durch thermoplastische Mehrschichtverbunde enthaltend
I. mindestens eine Schicht einer Formmasse auf Basis von Polyamid, wobei mindestens 50 % aller im Polyamid vorhandenen Endgruppen Aminoendgruppen darstellen und die Aminoendgruppenkonzentration in der Komponente I. im Bereich von 30 bis 130 mmol/kg liegt,
   und
II. mindestens eine Schicht einer Formmasse auf Basis eines Gemisches aus
   a. 95 bis 60 Gew.-% eines linearen, kristallinen Polyesters
   und
   b. 5 bis 40 Gew.-% eines reaktive Gruppen aufweisenden Polymeren - ausgenommen solche mit Epoxidgruppen,
   wobei die der Komponente II. b. entstammenden reaktiven Gruppen in der Komponente II. in einer Konzentration zwischen 4 und 95 mmol/kg enthalten sind,
und die beiden Schichten kraftschlüssig miteinander verbunden sind.

Als Polyamide kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. (Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleitetem Lactam ausgegangen worden ist - H. Domininghaus, **Die Kunststoffe und ihre Eigenschaften,** Seite 272, VDI-Verlag (1976).)

Sofern Copolyamide verwendet werden, können diese z. B. Adipinsäure, Sebacinsäure, Korksäure, Isophthalsäure, Terephthalsäure als Cosäure bzw. Bis(4'-aminocyclohexyl)-methan, Trimethylhexamethylendiamin, Hexamethylendiamin o. ä. Codiamin enthalten.

Die Herstellung dieser Polyamide ist bekannt (z. B. D. B. Jacobs, J. Zimmermann, **Polymerization Processes,** S. 424-67; Interscience Publishers, New York (1977); DE-AS 21 52 194).

Ebenfalls geeignet als Polyamide sind gemischte aliphatische/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology,** 3. Aufl., Vol. 18, Seiten 328 und 435 - Wiley & Sons (1982) beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität (η rel) im Bereich von 1,5 bis 2,8.

Die genannten Polyamide werden für sich oder in Gemischen eingesetzt.

Wesentlich bei den erfindungsgemäß eingesetzten Polyamiden (Komponente I.) ist, daß mindestens 50 %, vorzugsweise 70 % aller im Polyamid vorhandenen Endgruppen Aminoendgruppen darstellen. Darüber hinaus ist es von Vorteil, wenn die Aminoendgruppenkonzentration in der Komponente I. sich im Bereich von 30 bis 130 mmol/kg, vorzugsweise 60 bis 110 mmol/kg bewegt.

Die linearen, kristallinen Polyester (Komponente II. a) weisen nachstehende Grundstruktur auf 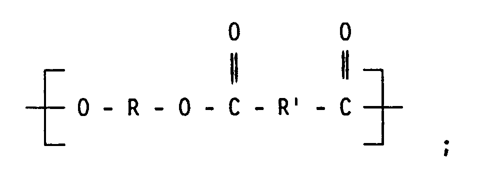 dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel 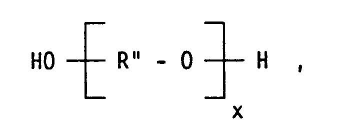 wobei R'' einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure in Frage.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie,** 4. Aufl., Bd. 19, Seite 65 ff. - Verlag Chemie GmbH, Weinheim, 1980).

Die erfindungsgemäß eingesetzten Polyester weisen eine Viskositätszahl (J-Wert) im Bereich von 80 bis 240 cm³/g auf.

Die Polyamide (Komponente I.) und/oder die linearen, kristallinen Polyester (Komponente II. a.) können bis zu 40 Gew.-% andere Thermoplaste enthalten, sofern diese die Verbundfähigkeit nicht stören. Insbesondere seien hier Polycarbonat [H. Schnell, **Chemistry and Physics of Polycarbonates,** Interscience Publishers, New York (1981)], Acrylnitril/Styrol/Butadien- (Houben-Weyl, **Methoden der organischen Chemie,** Bd. 14/1, Georg Thieme Verlag Stuttgart, S. 393 - 406; **Ullmanns Encyclopädie der technischen Chemie,** 4. Auflage, Bd. 19, Verlag Chemie Weinheim (1981), S. 279 - 284), Acrylnitril/Styrol/Acrylat- **(Ullmanns Encyclopädie der technischen Chemie,** 4. Auflage, Bd. 19, Verlag Chemie Weinheim (1981), S. 277 - 295), Acrylnitril/Styrol-Copolymerisat **(Ullmanns Encyclopädie** **der technischen Chemie,** 4. Auflage, Bd. 19, Verlag Chemie Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide und/oder Polyester schlagzäh eingestellt werden. Geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685).

Als Komponente II. b. werden Polymere eingesetzt, die reaktive Gruppen aufweisen, welche in der Lage sind, mit den reaktiven Gruppen eines Polyesters bzw. eines Polyamides zu reagieren. Unter reaktiven Gruppen werden Carboxyl-, Anhydrid-, Ester-, N-Acyl-Lactam-, Oxazolin-Gruppen verstanden. Insbesondere geeignet sind Carbonsäureanhydridgruppen. Bevorzugt werden kautschukelastische Polymere.

Als für die Komponente II. b. geeignete Polymere seien beispielsweise genannt: Styrol/Maleinsäure-, Styrol/(Meth)Acrylsäure-, Styrol/Butylacrylat/(Meth)Acrylsäure-, Ethylen/(Meth)Acrylsäure-, Ethylen/Butylacrylat/(Meth)Acrylsäure-Copolymere o. ä.

Ferner kommen Pfropfcopolymere mit Ethylen/Propylen-, Ethylen/Propylen/Dien-, Styrol/Butadien-Block-, Styrol/Butadien-, Styrol-Block-, Styrol/Ethylen/Butylen-Block-, Styrol/Acrylatester-Copolymere oder Butadien-, Acrylat- oder Silikonkautschuke oder Polytransoctenylen als Pfropfgrundlage in Frage.

Erfindungsgemäß geeignete Pfropfmonomere sind beispielsweise (Meth) Acrylsäure, Maleinsäure(anhydrid), Vinyloxazolin, Methacryloyllaurinlactam.

Die genannten, reaktive Gruppen aufweisenden Polymere sowie ihre Herstellung sind grundsätzlich bekannt [EP-OSS 164 179, 173 380, 210 307, 404 261; US-PS 3 953 655; F.R. Eirick, **Science and Technology of Rubber,** Academic Press, New York (1978), pp 43 - 48, 65 - 71, 455 - 487; M. Fedtke, **Reaktionen an Polymeren,** VEB Deutscher Verlag für Grundstoffindustrie, Leipzig, (1985); G. Allen, **Comprehensive Polymer Science,** Pergamon Press, Oxford, (1988), pp 2 - 42, 403 - 419; P. Svec, **Styrene-based Plastics and their Modification,** Ellis Horwood, New York, (1989)].

Die Komponente II. setzt sich zusammen aus 95 bis 60, vorzugsweise 95 bis > 70, und insbesondere aus 90 bis 80 Gew.-% an Komponente II. a. und 5 bis 40, vorzugsweise 5 bis < 30, und insbesondere aus 10 bis 20 Gew.-% an Komponente II. b. Eine weitere wesentliche Voraussetzung ist, daß die der Komponente II. b. entstammenden reaktiven Gruppen in der Komponente II. in einer Konzentration zwischen 4 und 95 mmol/kg, vorzugsweise zwischen 6 und 75 mmol/kg vorliegen.

Die Herstellung der Komponente II. erfolgt nach üblichen und bekannten Verfahren durch Schmelzemischen der Komponenten II. a. und II. b. in einem gut knetenden Mischaggregat, wie z. B. einem Doppelschneckenkneter, bei Temperaturen zwischen 200 und 300 °C.

Der Komponente I. sowie Komponente II. können übliche Hilfs- und Zusatzstoffe wie z. B. Flammschutzmittel, Stabilisatoren, Verarbeitungshilfsmittel, Viskositätsverbesserer, Füllstoffe, Pigmente o. ä. zugefügt werden.

Die Fertigung der Mehrschichtverbunde kann ein- oder mehrstufig erfolgen.

Beim einstufigen Spritzgießverfahren bringt man die verschiedenen Schmelzen in einer Form zusammen und läßt das Formteil erkalten (Mehrkomponentenspritzguß).

Beim einstufigen Extrusionsverfahren werden in üblicher Weise die verschiedenen Schmelzen coextrudiert.

Bei den mehrstufigen Verfahren wird zunächst ein Formteil entweder aus der Komponente I. oder der Komponente II. hergestellt und dann mit den übrigen Komponenten beaufschlagt, was durch Pressen, Spritzgießen oder Extrudieren geschehen kann.

Die erfindungsgemäßen Mehrschichtverbunde weisen in hervorragendem Maße eine gute Beständigkeit sowie gute Sperrwirkung gegen Diffusion gegenüber chemischen Agenzien, Lösemitteln und Kraftstoffen auf. Ferner sind die beiden Schichten kraftschlüssig miteinander verbunden, so daß z. B. bei thermischer Ausdehnung oder Biegen des Rohres kein Abscheren der verschiedenen Schichten voneinander auftritt. Ferner ist es auch möglich, Werkstoffe herzustellen, welche die erfindungsgemäßen Mehrschichtverbunde mehrfach übereinander (alternierend) enthalten.-

Diese erfindungsgemäßen Mehrschichtverbunde finden bei Konstruktionsteilen vor allem in Bereich der Elektro-, Maschinenbau- und Automobilindustrie dort Verwendung, wo die Steifigkeit des Polyesters mit der Zähigkeit des Polyamids kombiniert werden soll oder wo die nachteiligen Eigenschaften des Polyamids wie mangelnde UV-Beständigkeit, nicht ausreichend Kratzfestigkeit oder schlechte Sperrwirkung durch eine Beschichtung aus Polyester ausgeglichen werden soll. Insbesondere finden sie auch Anwendung als Folien, vor allem als Lebensmittelverpackungsfolien, oder als Mehrschichtrohre, z. B. im Bereich der Kfz-Industrie.

Die in den Beispielen aufgeführten Ergebnisse wurden mit Hilfe nachstehender Meßverfahren bestimmt.

Die **Bestimmung der Lösungsviskosität** (Viskositätszahl J) **der Polyester** erfolgt in einer 0,5 Gew.-%igen Phenol/o-Dichlorbenzol-Lösung (Gewichtsverhältnis 1 : 1) bei 25 °C gemäß DIN 53 728/ ISO 1628/5 - Teil 5.

Die **Bestimmung der Lösungsviskosität** (rel. Viskosität η ᵣₑₗ) der **Polyamide** erfolgt unter Verwendung einer 0,5 Gew.-%igen m-Kresol-Lösung bei 25 °C gemäß DIN 53 727/ISO 307.

Zur **Bestimmung der Aminoendgruppen** wird 1 g der Komponente I. in 50 ml m-Kresol bei 25 °C gelöst. Die Lösung wird mit Perchlorsäure potentiometrisch titriert.

Zur **Bestimmung der Carboxylendgruppen** in der Komponente I. bzw. II. wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglycol (0,05 mol KOH/l) gegen Phenolphthalein bis zum Farbumschlag titriert.

Die **Bestimmung der reaktiven** Gruppen in der Komponente II. b. erfolgt je nach Art der reaktiven Gruppe. Bei Maleinsäureanhydrid wird der Gehalt IR-spektroskopisch (Anhydridbande bei 1790 cm⁻¹) ermittelt.

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Mit Buchstaben gekennzeichnete Beispiele sind nicht erfindungsgemäß.-

### Beispiele

### A. Komponente I.

- **A 1:**: Polyamid 12 (ηᵣₑₗ: 1,6; 34 % der Endgruppen Aminogruppen; 39 mmol/kg Aminoendgruppen; 75 mmol/kg Carboxylendgruppen)
- **A 2:**: Polyamid 12 (ηᵣₑₗ: 1,9; 86 % der Endgruppen Aminogruppen; 60 mmol/kg Aminoendgruppen; 10 mmol/kg Carboxylendgruppen)
- **A 3:**: Polyamid 12 (ηᵣₑₗ: 2,08; 30 % der Endgruppen Aminogruppen; 16 mmol/kg Aminoendgruppen; 36 mmol/kg Carboxylendgruppen)
- **A 4:**: Polyamid 6.6 (ηᵣₑₗ: 1,9; 30 % der Endgruppen Aminogruppen; 27 mmol/kg Aminoendgruppen; 63 mmol/kg Carboxylendgruppen)
- **A 5:**: Polyamid 12 (ηᵣₑₗ: 2,1; 8,3 % der Endgruppen Aminogruppen; 5 mmol/kg Aminoendgruppen; 55 mmol/kg Carboxylendgruppen)
- **A 6:**: Polyamid 12 (ηᵣₑₗ: 2,1; 28 % der Endgruppen Aminogruppen; 17 mmol/kg Aminoendgruppen; 43 mmol/kg Carboxylendgruppen; modifiziert mit 7,5 Gew.-Tln. handelsüblichem Weichmacher pro 100 Gew. -Tle. Polyamid 12)
- **A 7:**: Polyamid 6 (ηᵣₑₗ: 2,01; 51,6 % der Endgruppen Aminogruppen; 33 mmol/kg Aminoendgruppen; 31 mmol/kg Carboxylendgruppen)
- **A 8:**: Polyamid 6.12 (ηᵣₑₗ: 1,8; 4 % der Endgruppen Aminogruppen; 5 mmol/kg Aminoendgruppen; 120 mmol/kg Carboxylendgruppen)
- **A 9:**: Polyamid 6.12 (ηᵣₑₗ: 1,8; 88 % der Endgruppen Aminogruppen; 93 mmol/kg Aminoendgruppen; 13 mmol/kg Carboxylendgruppen)
- **A 10:**: Polyamid 10.12 (ηᵣₑₗ: 1,89; 86 % der Endgruppen Aminogruppen; 101 mmol/kg Aminoendgruppen; 16 mmol/kg Carboxylendgruppen)
- **A 11:**: Polyamid 6.6 (ηᵣₑₗ: 1,81; 78 % der Endgruppen Aminogruppen; 105 mmol/kg Aminoendgruppen; 29 mmol/kg Carboxylendgruppen)

### B. Komponente II.

- **B 1:**: Homopolybutylenterephthalat (J-Wert: 165 cm³/g - VESTODUR^{R} 3000).
- **B 2:**: Homopolybutylenterephthalat (J-Wert: 110 cm³/g - VESTODUR^{R} 1000).
- **B 3:**: Homopolyethylenterephthalat (POLYCLEAR^{R} TR 86).
- **B 4:**: Blend aus
a. 90 Gew.-% Homopolybutylenterephthalat (J-Wert: 110 cm³/g - VESTODUR^{R} 1000)
   und
b. 10 Gew.-% maleinsäuremodifiziertem EPM (Gehalt an Maleinsäureanhydrid: 0,7 Gew.-% - bezogen auf Komponente b; Anhydridgruppengehalt: 7 mmol/kg - bezogen auf die Komponente II.)
- **B 5:**: Blend aus
a. 70 Gew.-% Homopolybutylenterephthalat (J-Wert: 165 cm³/g - VESTODUR^{R} 3000)
   und
b. 30 Gew. -% MAKROLON^{R} 2800 (Bisphenol A - Polycarbonat)
- **B 6:**: Blend aus
a. 80 Gew.-% Homopolybutylenterephthalat (J-Wert: 110 cm³/g - VESTODUR^{R} 1000)
   und
b. 20 Gew.-% maleinsäuremodifiziertem EPM (Gehalt an Maleinsäureanhydrid: 0,7 Gew.-% - bezogen auf Komponente b; Anhydridgruppengehalt: 14 mmol/kg - bezogen auf die Komponente II.)
- **B 7:**: Blend aus
a. 80 Gew.-% Homopolybutylenterephthalat (J-Wert: 110 cm³/g - VESTODUR^{R} 1000)
   und
b. 20 Gew. -% maleinsäuremodifiziertem Poly-trans-octenylen (Gehalt an Maleinsäureanhydrid: 3,5 Gew.-% - bezogen auf Komponente b; Anhydridgruppengehalt: 71 mmol/kg - bezogen auf die Komponente II.)

### C. Herstellung der Mehrschichtverbunde

Die Komponenten I. bzw. II. werden zunächst einzeln zu ca. 1 mm starken Preßplatten verarbeitet (Preßzeit: 10 min, Preßtemperatur: 10 °C oberhalb der Schmelz- bzw. Erweichungstemperatur). Es werden keine Formtrennmittel verwendet. Die Einzelplatten werden danach zu einem Mehrschichtverbund verpreßt. Die Preßtemperatur richtet sich dabei nach dem Material mit dem höchsten Schmelz- bzw. Erweichungspunkt. Die Preßzeit liegt bei 10 min.

**Tabelle 1**

| **Versuch** | **Schicht A** | **Schicht B** | **an Grenzfläche mechanisch trennbar - nach Lagerung** | | |
|---|---|---|---|---|---|
| | | | **bei 23 °C** | **bei 160 °C** | **in Kraftstoff**^{*****}^{**)**} |
| A | A1 | B1 | ja | ja | ja |
| B | A2 | B1 | ja | ja | ja |
| C | A3 | B2 | ja | ja | ja |
| D | A4 | B3 | ja | ja | ja |
| E | A5 | B4 | ja | ja | ja |
| F | A3 | B5 | ja | ja | ja |
| G | A6 | B2 | ja | ja | ja |
| H | A6 | B1 | ja | ja | ja |
| I | A7 | B1 | ja | ja | ja |
| K | A8 | B3 | ja | ja | ja |

| | | | | | |
|---|---|---|---|---|---|
| *) Lagerung bei 23 °C während 5 Tage in Normkraftstoff M 15 (42,5 Vol.-Tle. Isooctan, 42,5 Vol.-Tle. Toluol und 15 Vol.-Tle. Methanol). | | | | | |

**Tabelle 2**

| **Versuch** | **Schicht A** | **Schicht B** | **an Grenzfläche mechanisch trennbar - nach Lagerung** | | |
|---|---|---|---|---|---|
| | | | **bei 23 °C** | **bei 160 °C** | **in Kraftstoff**^{*****}^{**)**} |
| 1 | A2 | B6 | nein | nein | nein |
| 2 | A9 | B6 | nein | nein | nein |
| 3 | A10 | B6 | nein | nein | nein |
| 4 | A10 | B4 | nein | nein | nein |
| 5 | A11 | B6 | nein | nein | nein |
| 6 | A11 | B4 | nein | nein | nein |
| 7 | A9 | B7 | nein | nein | nein |

| | | | | | |
|---|---|---|---|---|---|
| *) Lagerung bei 23 °C während 5 Tage in Normkraftstoff M 15 (42,5 Vol.-Tle. Isooctan, 42,5 Vol.-Tle. Toluol und 15 Vol.-Tle. Methanol). | | | | | |

## Patentansprüche

1. Thermoplastischer Mehrschichtverbund enthaltend
I. mindestens eine Schicht einer Formmasse auf Basis von Polyamid mit einer relativen Viskosität ηᵣₑₗ im Bereich von 1,5 bis 2,8, wobei mindestens 50 % aller im Polyamid vorhandenen Endgruppen Aminoendgruppen darstellen und die Aminoendgruppenkonzentration in der Komponente I. im Bereich von 30 bis 130 mmol/kg liegt,
und
II. mindestens eine Schicht einer Formmasse auf Basis eines Gemisches aus
a. 95 bis 60 Gew.-% eines linearen, kristallinen Polyesters der Grundstruktur 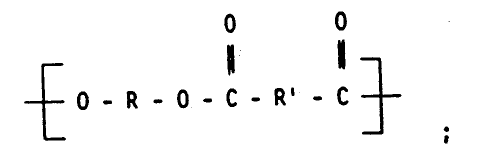 dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar,
und
b. 5 bis 40 Gew.-% eines reaktive Gruppen aufweisenden Polymeren - ausgenommen solche mit Epoxidgruppen -, in der Art, daß die reaktiven Gruppen in der Lage sind, mit den reaktiven Gruppen des Polyamids zu reagieren, wobei die der Komponente II. b. entstammenden reaktiven Gruppen in der Komponente II. in einer Konzentration zwischen 4 und 95 mmol/kg enthalten sind,
und die beiden Schichten kraftschlüssig miteinander verbunden sind.

2. Thermoplastischer Mehrschichtverbund nach Anspruch 1,
dadurch gekennzeichnet,
daß mindestens 70 % aller im Polyamid vorhandenen Endgruppen Aminoendgruppen darstellen.

3. Thermoplastischer Mehrschichtverbund nach Anspruch 1,
dadurch gekennzeichnet,
daß in der Komponente I. die Aminoendgruppenkonzentration im Bereich von 60 bis 110 mmol/kg liegt.

4. Thermoplastischer Mehrschichtverbund nach den Ansprüchen 1 bis 3,
dadurch gekennzeichnet,
daß die Komponente II. eine Formmasse auf Basis eines Gemisches aus
a. 95 bis > 70 Gew.-% eines linearen, kristallinen Polyesters
und
b. 5 bis < 30 Gew.-% eines reaktive Gruppen aufweisenden Polymeren
darstellt.

5. Thermoplastischer Mehrschichtverbund nach den Ansprüchen 1 bis 3,
dadurch gekennzeichnet,
daß die Komponente II. eine Formmasse auf Basis eines Gemisches aus
a. 90 bis 80 Gew.-% eines linearen, kristallinen Polyesters
und
b. 10 bis 20 Gew.-% eines reaktive Gruppen aufweisenden Polymeren
darstellt.

6. Thermoplastischer Mehrschichtverbund nach den Ansprüchen 1 bis 5,
dadurch gekennzeichnet,
daß die in der Komponente II. b. enthaltenen reaktiven Gruppen Carboxyl-, Anhydrid-, Ester-, N-Acyl-Lactam oder Oxazolin-Gruppen darstellen.

7. Thermoplastischer Mehrschichtverbund nach den Ansprüchen 1 bis 6,
dadurch gekennzeichnet,
daß die der Komponente II. b. entstammenden reaktiven Gruppen in der Komponente II. in einer Konzentration zwischen 6 und 75 mmol/kg enthalten sind.

8. Thermoplastischer Mehrschichtverbund nach den Ansprüchen 1 bis 7,
dadurch gekennzeichnet,
daß als Komponente II. b. ein kautschukelastisches Polymeres enthalten ist.

9. Verwendung des thermoplastischen Mehrschichtverbundes nach den Ansprüchen 1 bis 8 in Formteilen.

10. Verwendung des thermoplastischen Mehrschichtverbundes nach Anspruch 9,
dadurch gekennzeichnet,
daß er in einem Werkstoff mehrfach übereinander (alternierend) enthalten ist.

11. Verwendung des thermoplastischen Mehrschichtverbundes nach den Ansprüchen 9 und 10 für Hohlprofile.

## Claims

1. A thermoplastic multilayer composite comprising
I. at least one layer of a moulding composition based on polyamide having a relative viscosity ηᵣₑₗ in the range from 1.5 to 2.8, at least 50% of all the end groups present in the polyamide being amino end groups and the concentration of amino end groups in component I. being in the range from 30 to 130 mmol/kg,
and
II. at least one layer of a moulding composition based on a mixture of
a. 95 to 60% by weight of a linear, crystalline polyester of the basic structure 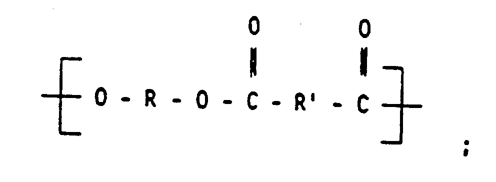 where R is a divalent branched or unbranched aliphatic and/or cycloaliphatic radical having 2 to 12, preferably 2 to 8, carbon atoms in the carbon chain and R' is a divalent aromatic radical having 6 to 20, preferably 8 to 12, carbon atoms in the carbon framework,
and
b. 5 to 40% by weight of a polymer containing reactive groups - excluding those containing epoxide groups - and in such a manner that the reactive groups are capable of reacting with the reactive groups of the polyamide,
the reactive groups originating from component II. b. being contained in component II. in a concentration of from 4 to 95 mmol/kg,
and the two layers are non-positively bonded to one another.

2. A thermoplastic multilayer composite according to claim 1, characterised in that at least 70% of all the end groups present in the polyamide are amino end groups.

3. A thermoplastic multilayer composite according to claim 1, characterised in that the concentration of amino end groups in component I. is in the range from 60 to 110 mmol/kg.

4. A thermoplastic multilayer composite according to any of claims 1 to 3, characterised in that component II. is a moulding composition based on a mixture of
a. 95 to > 70% by weight of a linear, crystalline polyester
and
b. 5 to < 30% by weight of a polymer containing reactive groups.

5. A thermoplastic multilayer composite according to any of claims 1 to 3, characterised in that component II. is a moulding composition based on a mixture of
a. 90 to 80% by weight of a linear, crystalline polyester
and
b. 10 to 20% by weight of a polymer containing reactive groups.

6. A thermoplastic multilayer composite according to any of claims 1 to 5, characterised in that the reactive groups contained in component II. b. are carboxyl, anhydride, ester, N-acyl-lactam or oxazoline groups.

7. A thermoplastic multilayer composite according to any of claims 1 to 6, characterised in that the reactive groups originating from component II. b. are present in component II. in a concentration of from 6 to 75 mmol/kg.

8. A thermoplastic multilayer composite according to any of claims 1 to 7, characterised in that it comprises a rubber-elastic polymer as component II.b.

9. Use of the thermoplastic multilayer composite according to any of claims 1 to 8 in mouldings.

10. Use of the thermoplastic multilayer composite according to claim 9, characterised in that it is present in a material a plurality of times one above another (in alternation).

11. Use of the thermoplastic multilayer composite according to either of claims 9 and 10 for hollow profiles.

## Revendications

1. Un composé thermoplastique à plusieurs couches contenant :
1- au moins une couche d'une matière moulable à base de polyamide ayant une viscosité relative ηᵣₑₗ au niveau de 1,5 à 2,8, dans laquelle au moins 50 % de tous les groupes terminaux existant dans le polyamide représentent des groupes terminaux amino et la concentration des groupes terminaux amino dans le composant 1 se situe au niveau de 30 à 130 mmol/kg.
et,
2- au moins une couche d'une matière moulable à base d'un mélange de :
a. 95 à 60 % en poids d'un polyester cristallin linéaire de structure de base : 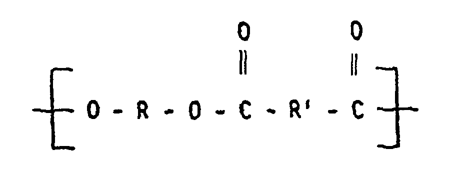 dans laquelle R représente un radical bivalent ramifié ou non ramifié aliphatique et/ou cycloaliphatique avec de 2 à 12, de préférence de 2 à 8 atomes de C dans la chaîne carbonée et R' un radical aromatique bivalent avec de 6 à 20, de préférence de 8 à 12 atomes de C dans la structure carbonée,
et
b. 5 à 40 % en poids d'un polymère comportant des groupes réactifs, à l'exception de ceux ayant des groupes époxy, de manière que les groupes réactifs soient en condition, de réagir avec les groupes réactifs du polyamide.
les groupes réactifs issus du composant II.b étant contenus dans le composant II à une concentration comprise entre 4 et 95 mmol/kg,
et les deux couches sont reliées entre elles par une liaison par la force.

2. Composé thermoplastique à plusieurs couches selon la revendication 1,
caractérisé en ce que
les groupes terminaux amino représentent au moins 70 % de tous les groupes terminaux existant dans le polyamide.

3. Composé thermoplastique à plusieurs couches selon la revendication 1,
caractérisé en ce que
dans le composant 1 la concentration en groupes terminaux amino se situe dans la zone de 60 à 110 mmol/kg.

4. Composé thermoplastique à plusieurs couches selon les revendications 1 à 3,
caractérisé en ce que
le composant II représente une matière moulable à base d'un mélange de :
a. 95 à > 70 % en poids d'un polyester linéaire cristallin
et,
b. 5 à < 30 % en poids d'un polymère comportant des groupes réactifs.

5. Composé à plusieurs couches thermoplastique selon les revendications 1 à 3,
caractérisé en ce que
le composant II représente une matière moulable à base d'un mélange de :
a. 90 à 80 % en poids d'un polyester linéaire cristallin,
et,
b. 10 à 20 % en poids d'un polymère comportant des groupes réactifs.

6. Composé à plusieurs couches thermoplastique selon les revendications 1 à 5,
caractérisé en ce que
les groupes réactifs contenus dans le composant II.b. contiennent des groupes carboxyle, anhydride, ester, N-acyl-lactame ou oxazoline.

7. Composé à plusieurs couches thermoplastique selon les revendications 1 à 6,
caractérisé en ce que
les groupes réactifs issus du composant II.b. sont contenus dans le composant II en une concentration comprise entre 6 et 75 mmol/kg.

8. Composé à plusieurs couches thermoplastique selon les revendications 1 à 7,
caractérisé en ce que
comme composant II.b. est contenu un polymère élastique en caoutchouc.

9. Utilisation du composé à plusieurs couches thermoplastique dans des pièces moulables selon les revendications 1 à 8.

10. Utilisation du composé à plusieurs couches thermoplastique selon la revendication 9,
caractérisé en ce qu'
il est contenu dans un matériau de manière répétée superposée (en alternant).

11. Utilisation du composé à plusieurs couches thermoplastique selon les revendications 9 et 10 peur des profilés creux.
